# FASCICULE DE BREVET EUROPEEN

(11) **EP 2 288 543 B1**
(45) Date de publication et mention de la délivrance du brevet: **31.08.2011**
(21) Numéro de dépôt: 09797564.3
(22) Date de dépôt: 27.04.2009
(51) Int. Cl.: B64D 33/02, B64D 29/06

(54) **ENSEMBLE D'ENTREE D'AIR DE NACELLE DE MOTEUR D'AVION**
LUFTEINLASSANORDNUNG FÜR FLUGZEUGTRIEBWERKSGONDEL
AIRCRAFT ENGINE NACELLE AIR INTAKE ASSEMBLY

(30) Priorité: 25.06.2008 FR 0803558
(43) Date de publication de la demande: 02.03.2011
(73) Titulaire: Aircelle, 76700 Gonfreville l'Orcher (FR)
(72) Inventeur: VAUCHEL, Guy Bernard, F-76600 Le Havre (FR)
(74) Mandataire: Gaillarde, Frédéric F. Ch.
(86) Numéro de dépôt international: PCT/FR2009/050771
(87) Numéro de publication internationale: WO 2010/007258

(56) Documents cités:
- FR-A- 2 901 244
- US-A1- 2003 163 985

## Description

La présente demande de brevet se rapporte notamment à un ensemble d'entrée d'air de nacelle de moteur d'avion.

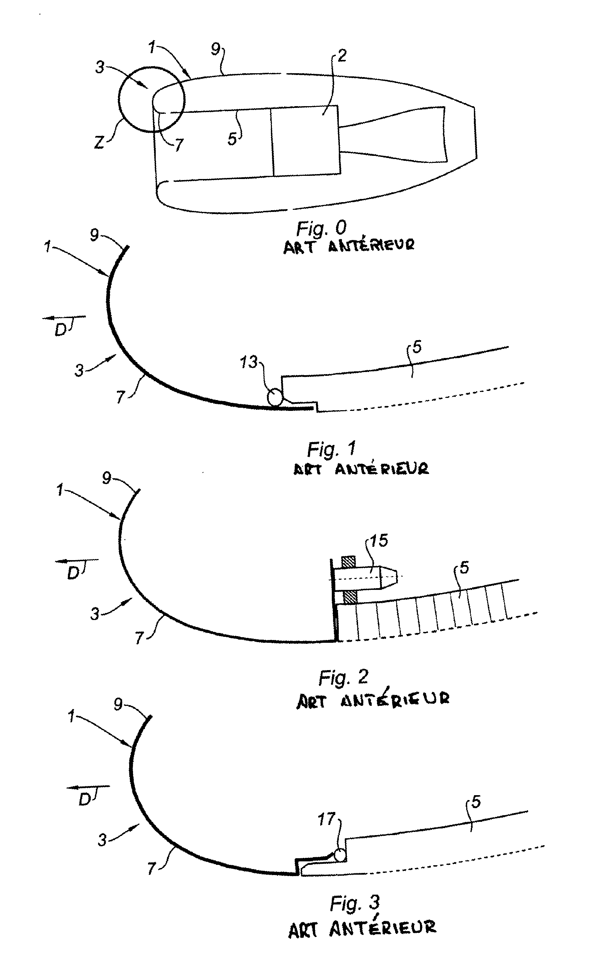

Une nacelle équipée d'un tel ensemble d'entrée d'air est représentée de manière générique sur la figure 0 ci-annexée.

Comme cela est visible sur cette figure, un tel ensemble d'entrée d'air 1 est placé en amont de la nacelle, et permet de canaliser l'air de l'extérieur vers la soufflante 2 du moteur de l'avion.

Comme cela est connu de l'état de la technique et visible sur les figures 1 à 3 ci-annexées, l'ensemble d'entrée d'air 1 peut comprendre une structure d'entrée d'air 3 et, en aval de celle-ci, une virole acoustique 5.

La structure d'entrée d'air 3 comprend une lèvre d'entrée d'air 7, élément périphérique constituant le bord d'attaque de cette structure d'entrée d'air, ainsi qu'un panneau externe 9 prolongeant la partie extérieure de la lèvre d'entrée d'air 7.

La virole acoustique 5 consiste essentiellement en un panneau doué d'une capacité d'absorption acoustique (structure en nid d'abeille par exemple), de forme sensiblement cylindrique, monté fixe sur le carter de soufflante (non représenté) du moteur de l'avion.

La structure d'entrée d'air peut être montée coulissante selon la direction D de l'axe du moteur, entre une position de fonctionnement représentée sur les figures 1 à 3, dans laquelle la virole acoustique se trouve dans le prolongement du bord intérieur de la lèvre, et une position de maintenance dans laquelle cette structure est écartée en amont de la virole acoustique.

Dans la position de fonctionnement représentée aux figures 1 à 3, il est essentiel que le bord intérieur de la lèvre soit ajusté de manière aussi parfaite que possible avec la virole acoustique, et ce tant pour assurer une continuité aérodynamique que pour assurer une parfaite étanchéité de la lèvre par rapport à la virole, ainsi que pour permettre une reprise correcte des efforts transmis à la virole acoustique par la structure d'entrée d'air.

Comme cela est visible sur les figures 1 à 3, différentes interfaces entre la lèvre 7 et la virole 5 sont utilisées dans l'état de la technique, afin d'obtenir l'étanchéité souhaitée : joint d'étanchéité 13 entre la lèvre 7 et le bord amont de la virole 5 (figure 1), pion de liaison 15 entre un retour de la lèvre 7 et la virole 5 (figure 2), ou joint d'étanchéité 17 entre un bord chanfreiné de la lèvre 7 et une partie monolithique de la virole 5 (figure 3).

un ensemble d'entrée d'air avec toutes les caractéristiques du préambule de la revendication 1 est aussi de US-2003/163985.

Il faut donc prévoir un jeu minimal entre cette lèvre et cette virole, l'inconvénient d'un tel jeu étant qu'il risque de conduire à un coincement de la structure d'entrée d'air lors de son ouverture pour opérations de maintenance, et à une difficulté d'emboîtement de cette structure entrée d'air sur la virole acoustique lors de sa fermeture.

La présente invention a notamment pour but de s'affranchir de cet inconvénient.

On atteint ce but de l'invention avec un ensemble d'entrée d'air de nacelle de moteur d'avion, comprenant une structure d'entrée d'air comportant une lèvre d'entrée d'air et une virole acoustique s'étendant en aval de cette lèvre d'entrée d'air et conçue pour être montée sur ladite structure fixe, ladite structure d'entrée d'air étant conçue pour être mobile par rapport à ladite structure fixe entre une position de fonctionnement, dans laquelle ladite lèvre est en contact avec ladite virole, et une position de maintenance, dans laquelle ladite lèvre est écartée en amont de ladite virole, cet ensemble étant remarquable en ce qu'il comprend des moyens de roulement adaptés pour permettre le centrage de cette lèvre par rapport à ladite virole.

La présence de ces moyens de roulement permet, tout en ayant un jeu minimal entre la lèvre et la virole, d'éviter tout risque de coincement à l'ouverture et tout risque de blocage à la fermeture de l'entrée d'air.

Suivant d'autres caractéristiques optionnelles de l'ensemble d'entrée d'air selon l'invention :
- lesdits moyens de roulement comprennent des galets solidaires de ladite structure d'entrée d'air,
- lesdits galets sont montés sur ladite lèvre d'entrée d'air,
- lesdits galets sont montés à l'intérieur d'une extension de ladite lèvre, cette extension étant munie d'ouvertures laissant passer une partie active desdits galets,
- ladite extension présente une extrémité chanfreinée,
- lesdits galets sont montés sur une cloison intérieure de ladite lèvre,
- des platines d'appui desdits galets sont fixés sur ladite virole,
- lesdites platines d'appui sont fixées sur une partie monolithique de ladite virole,
- lesdits moyens de roulement comprennent des galets aptes à être montés sur ladite structure fixe,
- lesdits moyens de roulement comprennent des galets montés sur ladite virole,
- ladite lèvre présente une extension d'appui desdits galets,
- lesdits moyens de roulement comprennent des tunnels de roulements solidaires de ladite virole, et des pions solidaires de ladite lèvre, disposés de manière à pénétrer à l'intérieur desdits tunnels,
- des moyens de réglage de la position desdits moyens de roulement sont prévus,
- des moyens de rappel élastique desdits moyens de roulement vers leur position d'appui sont prévus.

La présente invention se rapporte également à une nacelle de moteur d'avion équipée d'un ensemble d'entrée d'air conforme à ce qui précède.

D'autres caractéristiques et avantages de la présente invention apparaîtront à la lumière de la description qui va suivre, et à l'examen des figures ci-annexées, dans lesquelles :
- la figure 0 est une vue en coupe schématique d'une nacelle générique de la technique antérieure, mentionnée dans le préambule de la présente demande de brevet ;
- les figures 1 à 3 sont des vues schématiques en coupe longitudinale de la zone Z de la nacelle de la figure 0, permettant de visualiser plusieurs types d'ensembles d'entrées d'air de la technique antérieure, mentionnés dans le préambule de la présente demande de brevet ;

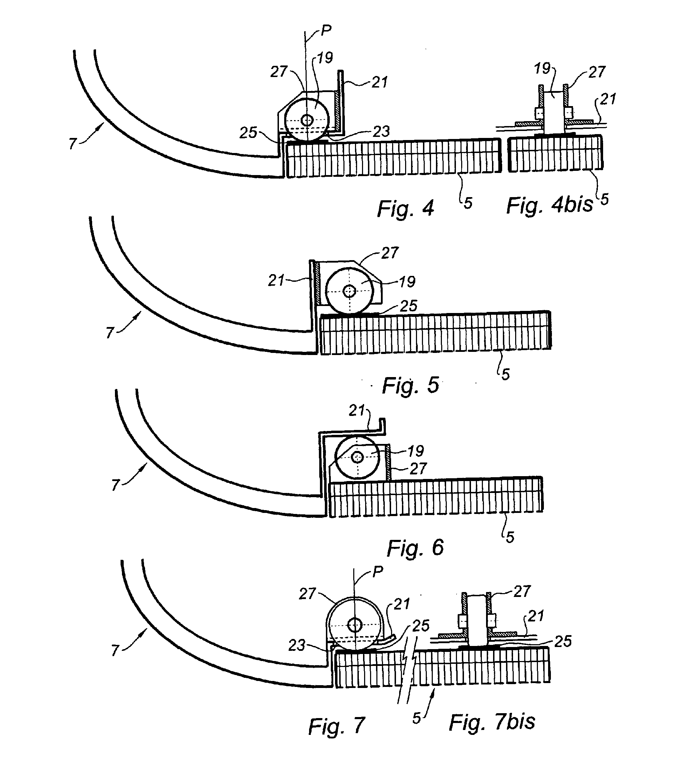

- les figures 4 à 14 sont des vues schématiques en coupe longitudinale d'ensembles d'entrée d'air de la présente invention, selon différents modes de réalisation ;
- les figures 4bis, 7bis, 11 bis, 12 bis, 14 bis sont des vues en coupes transversales, prises selon les plans P respectifs des figures 4, 7, 11, 12 et 14, des variantes représentées sur ces figures ;

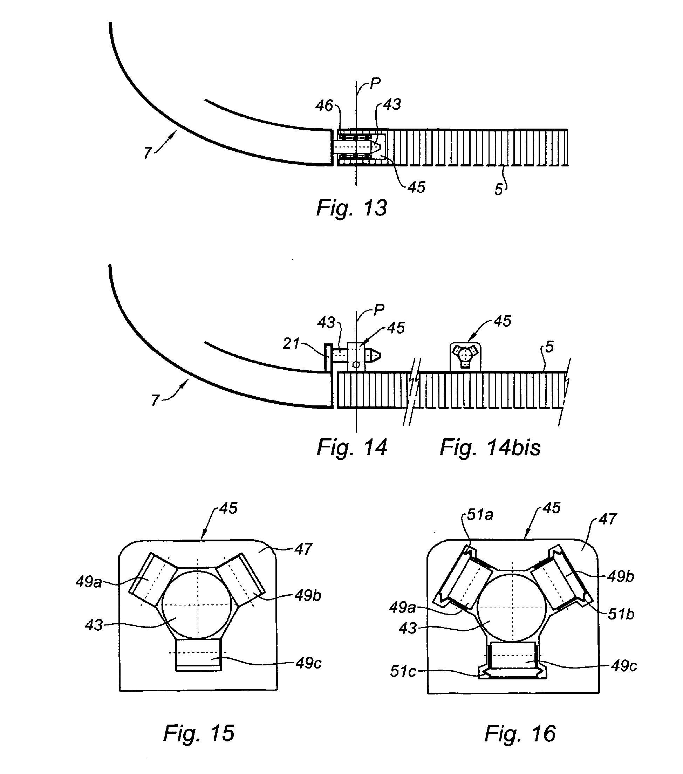

- les figures 15 et 16 sont des vues en coupe transversale, prises selon les plans P respectifs des figures 13 et 14, de deux variantes de réalisation d'un tunnel de roulement.

Sur l'ensemble de ces figures, des références identiques désignent des organes ou ensembles d'organes identiques ou analogues.

A noter également que l'on utilisera les termes « amont » et « aval », ces deux termes devant s'entendre par rapport au sens d'écoulement de l'air par rapport à l'ensemble d'entrée d'air, à savoir en l'occurrence de la gauche vers la droite de l'ensemble des figures ci-annexées.

En se reportant à présent aux figures 4 et 4bis, on peut voir un galet 19 monté pivotant à l'intérieur d'une extension 21 de la lèvre 7, par l'intermédiaire d'un étrier 27.

L'ouverture 23 formée à l'intérieur de l'extension 21 permet à ce galet 19 de coopérer avec une platine 25 d'appui de ce galet 19 sur la virole acoustique 5.

L'extension 21 est de préférence formée sur la totalité ou sur la quasi-totalité de la circonférence de la lèvre 7.

Plusieurs galets analogues au galet 19 sont répartis sur cette circonférence.

Dans le mode de réalisation représenté sur la figure 5, l'extension 21 présente la forme d'un simple retour par rapport à la lèvre 7, retour sur lequel sont fixés des étriers 27 de support des galets 19.

Dans le mode de réalisation de la figure 6, les étriers 27 supportant les galets 19 sont fixés sur la virole acoustique 5, et coopèrent avec une extension 21 en forme de L de la lèvre 7.

Dans le mode de réalisation des figures 7 et 7bis, les étriers 27 et leurs galets 19 associés sont montés sur une extension 21 de la lèvre 7 présentant un bord aval chanfreiné, ce qui facilite l'emboîtement de la lèvre 7 par rapport à la virole acoustique 5 lors du mouvement de cette lèvre de sa position de maintenance jusqu'à sa position de fonctionnement normal.

On notera que, comme dans la variante des figures 4 et 4bis, l'extension 21 présente des ouvertures 23 permettant le passage des galets 19 en vue de leur coopération avec la platine d'appui 25.

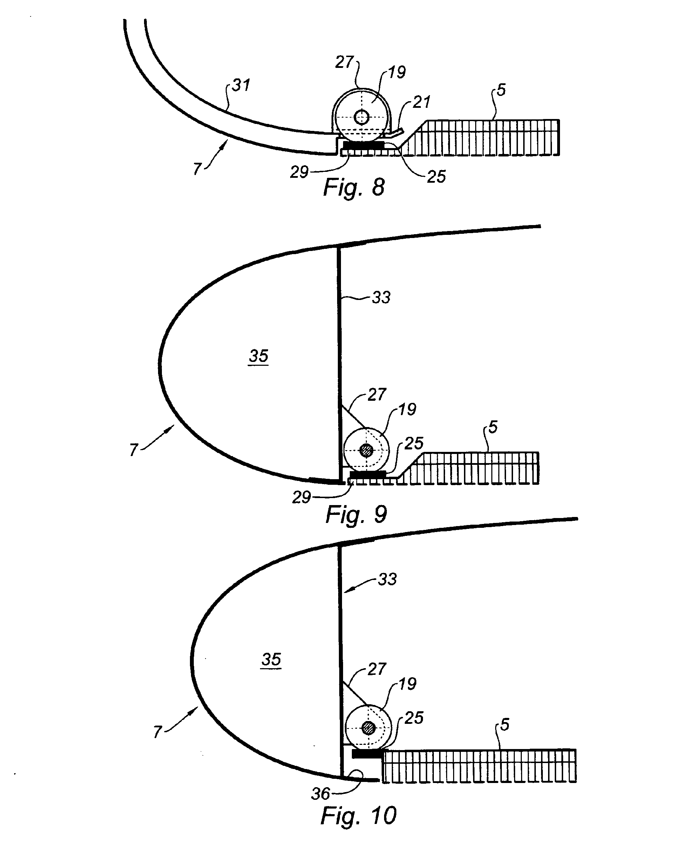

Dans la variante représentée à la figure 8, le bord amont 29 de la virole acoustique 5 présente une structure aplatie, dite « monolithique », extrêmement compacte et résistante.

Dans ce cas, les platines 25 peuvent être fixées sur ce bord 29, l'extension 21 étant alors agencée dans le prolongement de la face intérieure 31 de la lèvre 7.

Dans la variante représentée à la figure 9, chaque ensemble d'étrier 27 et de galet 19 est fixé sur une cloison intérieure 33 de la lèvre d'entrée d'air, cette cloison intérieure pouvant être par exemple la cloison définissant un compartiment de dégivrage 35 pour cette lèvre d'entrée d'air.

Dans la variante de la figure 9, l'appui des galets 19 sur la virole acoustique 5 se fait par l'intermédiaire de platines 25 disposées sur un bord amont 29 monolithique de cette virole, de manière analogue au cas de la figure 8.

Dans la variante de la figure 10, les appuis 25 sont disposés en porte-à-faux et en amont de la virole acoustique 5, et un retour 36 de la cloison 33 assure la continuité de la lèvre d'entrée d'air 7 avec la virole acoustique 5.

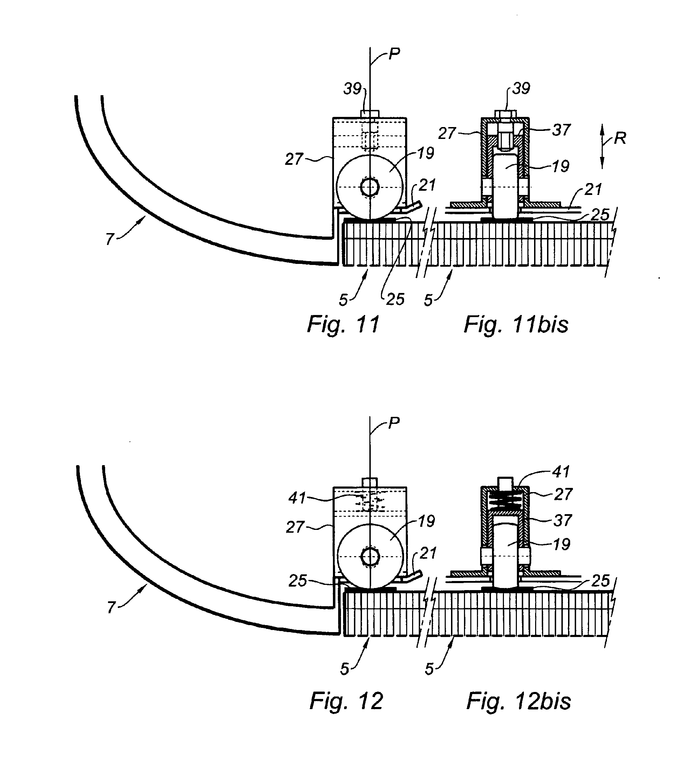

Sur les figures 11 et 11 bis, on a représenté une variante analogue à celle des figures 7 et 7bis, à ceci prêt que les galets 19 sont montés chacun sur un étrier mobile 37, monté réglable à l'intérieur d'un étrier fixe 27.

Des moyens de réglage tels que des vis 39, interposés entre l'étrier fixe 27 et l'étrier mobile 37, permettent de régler la position radiale (c'est-à-dire selon la direction R représentée sur les figures 11 et 11 bis) des galets 19.

Dans la variante représentée sur les figures 12 et 12bis, des moyens de rappel élastiques 41 tels que des ressorts remplacent les moyens de réglage 39 : ces moyens de rappel élastiques, interposés entre l'étrier fixe 27 et l'étrier mobile 37, permettent de rappeler les galets 19 au contact des platines 25.

Dans la variante représentée à la figure 13, le bord aval de l'entrée d'air 7 est muni d'une pluralité de pions 43, ces pions 43 coopérant avec des tunnels respectifs 45 formés dans le bord amont de la virole acoustique 5.

Chaque tunnel 45 est muni de moyens de roulement tels que les billes 46 aptes à coopérer avec les pions 43.

La pénétration des pions 43 dans les tunnels respectifs 45 est facilitée par la forme chanfreinée des extrémités de ces pions.

Dans le mode de réalisation des figures 14 et 14bis, les pions 43 sont fixés sur une extension radiale 21 de la lèvre 7, et coopèrent avec des tunnels de roulement 45 rapportés sur la face radialement extérieure de la virole acoustique 5.

Comme cela est visible sur la figure 15, ces tunnels de roulement rapportés 45 peuvent comprendre typiquement un corps 47 à l'intérieur duquel sont montés, dans cet exemple, sensiblement à 120°, trois rouleaux cylindriques 49a, 49b, 49c, coopérant avec les pions respectifs 43.

Le nombre de rouleaux n'est pas limité, il est déterminé par l'homme du métier en fonction des angles de renvoi d'effort vus par la structure dans l'installation considérée des systèmes de centrage.

Dans la variante représentée à la figure 16, on peut voir que les rouleaux 49a, 49b, 49c peuvent être montés à l'intérieur du corps 47 par l'intermédiaire de moyens de support élastiques 51 a, 51 b, 51 c, autorisant une certaine souplesse selon la direction perpendiculaire aux axes de rotation de ces rouleaux.

En variante non représentée, on pourrait également prévoir que les rouleaux 49a, 49b, 49c soient montés sur leurs axes respectifs par l'intermédiaire d'éléments élastomères, permettant d'obtenir un résultat sensiblement analogue à celui des moyens élastiques 51 a, 51 b, 51 c.

Le mode de fonctionnement et les avantages de la présente invention résultent directement de la description qui, précède.

Pour les opérations de maitnenance, il peut être nécessaire de faire coulisser la lèvre d'entrée d'air 7 en amont de la virole acoustique 5, de manière à accéder à des organes situés par exemple à l'intérieur de la lèvre d'entrée d'air 7, ou à l'extérieur de la virole acoustique 5.

Lors de ce coulissement, les galets 19, les billes 46 ou les rouleaux 49 permettent de limiter les frottements de la lèvre d'entrée d'air par rapport à la virole acoustique, et ainsi de faciliter ce mouvement de coulissement et de supprimer tout risque de coincement.

Lorsqu'on souhaite replacer la lèvre d'entrée d'air dans sa position de fonctionnement normal, c'est-à-dire en la faisant coulisser vers l'aval en direction de la virole acoustique 5, les galets 19, les billes 46 ou les rouleaux 49 permettent un accostage sans blocage de cette lèvre d'entrée d'air sur cette virole acoustique 5, et ce malgré des jeux entre ces ensembles d'organes qui sont calculés au plus juste de manière à répondre aux contraintes d'étanchéité, d'écoulement d'air optimisé et de transmission des efforts.

La présence des platines 25 permet de répartir sur la virole acoustique 5 les efforts transmis par les galets 19.

La présence des moyens de réglage 39 permet d'ajuster radialement les positions des galets 19, lors du premier montage de la lèvre d'entrée d'air 7 sur la virole acoustique 5, et/ou utlérieurement, notamment en cas de légère déformation de la lèvre d'entrée d'air 7 et/ou de la virole acoustique 5.

La présence des moyens de rappel élastiques 41 (ou 51 a, 51 b, 51 c) permet d'obtenir un certain amortissement des efforts transmis entre la lèvre d'entrée d'air 7 et la virole acoustique 5, notamment en situation de panne du moteur associé à cette entrée d'air.

Bien entendu, la présente invention n'est nullement limitée aux modes de réalisation décrits et représentés, fournis à titre de simples exemples.

C'est ainsi que les galets pourraient être interposés entre le panneau externe de la structure d'entrée d'air et une structure fixe supportant la virole acoustique (bride de fixation de virole, ou carter de soufflante).

C'est ainsi également que les préceptes de l'invention, décrits dans le cadre du mouvement d'une lèvre d'entrée d'air par rapport à une virole acoustique, pourraient être appliqués à d'autres parties mobiles d'une nacelle de moteur d'aéronef.

Tous les concepts décrits peuvent être utilisés seuls ou en association entre eux notamment avec des systèmes de centrage conventionnels comme des pions dans un alésage ajusté.

## Revendications

1. Ensemble d'entrée d'air (1) de nacelle de moteur d'avion, comprenant une structure d'entrée d'air (3) comportant une lèvre d'entrée d'air (7) et une virole acoustique (5) s'étendant en aval de cette lèvre d'entrée d'air (7) et conçue pour être montée sur une structure fixe (2), ladite structure d'entrée d'air (3) étant conçue pour être mobile par rapport à ladite structure fixe (2) entre une position de fonctionnement, dans laquelle ladite lèvre (7) est en contact avec ladite virole (5), et une position de maintenance, dans laquelle ladite lèvre (7) est écartée en amont de ladite virole (5), cet ensemble étant **caractérisé en ce qu'**il comprend des moyens de roulement (19 ; 46 ; 49a à 49c) adaptés pour permettre le centrage de cette lèvre (7) par rapport à ladite virole (5).

2. Ensemble selon la revendication 1, **caractérisé en ce que** lesdits moyens de roulement comprennent des galets (19) solidaires de ladite structure d'entrée d'air (3).

3. Ensemble selon la revendication 2, **caractérisé en ce que** lesdits galets (19) sont montés sur ladite lèvre d'entrée d'air (7).

4. Ensemble selon la revendication 3, **caractérisé en ce que** lesdits galets (19) sont montés à l'intérieur d'une extension (21) de ladite lèvre (7), cette extension étant munie d'ouvertures (23) laissant passer une partie active desdits galets (19).

5. Ensemble selon la revendication 4, **caractérisé en ce que** ladite extension (21) présente une extrémité chanfreinée.

6. Ensemble selon l'une quelconque des revendications 2 à 5, **caractérisé en ce que** lesdits galets (19) sont montés sur une cloison intérieure (33) de ladite lèvre (7).

7. Ensemble selon l'une quelconque des revendications 2 à 6, **caractérisé en ce que** des platines (25) d'appui desdits galets (19) sont fixées sur ladite virole (5).

8. Ensemble selon la revendication 7, **caractérisé en ce que** lesdites platines d'appui (25) sont fixées sur une partie monolithique (29) de ladite virole (5).

9. Ensemble selon la revendication 1, **caractérisé en ce que** lesdits moyens de roulement comprennent des galets (19) aptes à être montés sur ladite structure fixe (2).

10. Ensemble selon la revendication 1, **caractérisé en ce que** lesdits moyens de roulement comprennent des galets (19) montés sur ladite virole (5).

11. Ensemble selon la revendication 10, **caractérisé en ce que** ladite lèvre (7) présente une extension (21) d'appui desdits galets (19).

12. Ensemble selon la revendication 1, **caractérisé en ce que** lesdits moyens de roulement comprennent des tunnels de roulements (45) solidaires de ladite virole (5), et des pions (43) solidaires de ladite lèvre (7), disposés de manière à pénétrer à l'intérieur desdits tunnels (45).

13. Ensemble selon l'une quelconque des revendications précédentes, **caractérisé en ce que** des moyens de réglage (39) de la position desdits moyens de roulement (19) sont prévus.

14. Ensemble selon l'une quelconque des revendications précédentes, **caractérisé en ce que** des moyens de rappel élastique (41 ; 51a à 51c) desdits moyens de roulement (19 ; 49a à 49c) vers leur position d'appui sont prévus.

15. Nacelle de moteur d'avion, **caractérisée en ce qu'**elle est équipée d'un ensemble d'entrée d'air (1) conforme à ce qui précède.

## Claims

1. Aircraft engine nacelle air intake assembly (1) comprising an air intake structure (3) including an air intake lip (7) and an acoustic shroud (5) extending downstream of this air intake lip (7) and designed to be mounted on a fixed structure (2), said air intake structure (3) being designed to be able to move with respect to said fixed structure (2) between an operating position, in which said lip (7) is in contact with said shroud (5), and a maintenance position, in which said lip (7) is moved upstream away from said shroud (5), this assembly being **characterised in that** it comprised rolling means (19; 46; 49a to 49c) for making it possible to centre this lip (7) with respect to said shroud (5).

2. Assembly according to claim 1, **characterised in that** said rolling means comprise rollers (19) attached to said air intake structure (3).

3. Assembly according to claim 2, **characterised in that** said rollers (19) are mounted on said air intake lip (7).

4. Assembly according to claim 3, **characterised in that** said rollers (19) are mounted inside an extension (21) of said lip (7), this extension being provided with openings (23) for the passage of an active part of said rollers (19).

5. Assembly according to claim 4, **characterised in that** said extension (21) has a chamfered end.

6. Assembly according to any one of claims 2 to 5, **characterised in that** said rollers (19) are mounted on an inner partition (33) of said lip (7).

7. Assembly according to any one of claims 2 to 6, **characterised in that** bearing plates (25) for said rollers (19) are attached to said shroud (5).

8. Assembly according to claim 7, **characterised in that** said bearing plates (25) are attached to a monolithic part (29) of said shroud (5).

9. Assembly according to claim 1, **characterised in that** said rolling means comprise rollers (19) able to be mounted on said fixed structure (2).

10. Assembly according to claim 1, **characterised in that** said rolling means comprise rollers (19) mounted on said shroud (5).

11. Assembly according to claim 10, **characterised in that** said lip (7) has a bearing extension (21) for said rollers (19).

12. Assembly according to claim 1, **characterised in that** said rolling means comprise rolling tunnels (45) attached to said shroud (5) and pins (43) attached to said lip (7), said pins being arranged so as to penetrate into said tunnels (45).

13. Assembly according to any one of the preceding claims, **characterised in that** adjustment means (39) for adjusting the position of said rolling means (19) are provided.

14. Assembly according to any one of the preceding claims, **characterised in that** elastic return means (41; 51a to 51c) for returning said rolling means (19; 49a to 49c) to their bearing position are provided.

15. Aircraft engine nacelle, **characterised in that** it is equipped with an air intake assembly (1) according to the above.

## Patentansprüche

1. Lufteinlassanordnung (1) eine für Flugzeugmotorgondel, umfassend eine Lufteinlassstruktur (3), umfassend eine Lufteinlasslippe (7) und einen akustischen Ring (5), der sich vor dieser Lufteinlasslippe (7) erstreckt und entworfen ist, um zur einer festen Struktur (2) montiert zu werden, wobei die Lufteinlassstruktur (3) dazu entworfen ist, bezüglich der festen Struktur (2) zwischen einer Betriebsfunktion, in der die Lippe (7) mit dem Ring (5) in Kontakt ist, und einer Wartungsposition, in der die Lippe (7) nach dem Ring (5) entfernt ist, beweglich zu sein, wobei diese Anordnung **dadurch gekennzeichnet ist, dass** sie Wälzlagermittel (19; 46; 49a bis 49c) umfasst, die dazu angeordnet sind, die Zentrierung dieser Lippe (7) bezüglich des Rings (5) zu ermöglichen.

2. Anordnung nach Anspruch 1, **dadurch gekennzeichnet, dass** die Wälzlagermittel Rollen (19) umfassen, die mit der Lufteinlassstruktur (3) einstückig sind.

3. Anordnung nach Anspruch 2, **dadurch gekennzeichnet, dass** die Rollen (19) auf der Lufteinlasslippe (7) montiert sind.

4. Anordnung nach Anspruch 3, **dadurch gekennzeichnet, dass** die Rollen (19) im Inneren einer Verlängerung (21) der Lippe (7) montiert sind, wobei diese Verlängerung mit Öffnungen (23) versehen ist, die einen aktiven Teil der Rollen (19) passieren lassen.

5. Anordnung nach Anspruch 4, **dadurch gekennzeichnet, dass** die Verlängerung (21) ein abgeschrägtes Ende ist.

6. Anordnung nach einem der Ansprüche 2 bis 5, **dadurch gekennzeichnet, dass** die Rollen (19) auf einer inneren Trennwand (33) der Lippe (7) montiert sind.

7. Anordnung nach einem der Ansprüche 2 bis 6, **dadurch gekennzeichnet, dass** die Stützplatten (25) der Rollen (19) auf dem Ring (5) montiert sind.

8. Anordnung nach Anspruch 7, **dadurch gekennzeichnet, dass** die Stützplatten (25) auf einem monolithischen Teil (29) des Rings (5) befestigt sind.

9. Anordnung nach Anspruch 1, **dadurch gekennzeichnet, dass** die Wälzlagermittel Rolle (19) umfassen, die dazu angepasst sind, auf der festen Struktur (2) montiert zu werden.

10. Anordnung nach Anspruch 1, **dadurch gekennzeichnet, dass** die Wälzlagermittel Rollen (19) umfassen, die auf dem Ring (5) montiert sind.

11. Anordnung nach Anspruch 10, **dadurch gekennzeichnet, dass** die Lippe (7) eine Stützverlängerung (21) der Rollen (19) aufweist.

12. Anordnung nach Anspruch 1, **dadurch gekennzeichnet, dass** die Wälzlager Wälztunnel (45) umfassen, die mit dem Ring (5) einstückig sind, und Stifte (43), die mit der Lippe (7) einstückig sind, so angeordnet, um in das Innere der Tunnel (45) einzudringen.

13. Anordnung nach einem der vorhergehenden Ansprüche, **dadurch gekennzeichnet, dass** Mittel zur Einstellung (39) der Position der Wälzlagermittel (19) vorgesehen sind.

14. Anordnung nach einem der vorhergehenden Ansprüche, **dadurch gekennzeichnet, dass** elastische Rückholmittel (41 ; 51a bis 51 c) der Wälzlagermittel (19; 49a bis 49c) in ihre Stützposition vorgesehen sind.

15. Flugzeugmotorgondel, **dadurch gekennzeichnet, dass** sie mit einer Lufteinlassanordnung (1) gemäß dem Vorhergehenden ausgestattet ist.
